# EUROPEAN PATENT SPECIFICATION

(11) **EP 1 260 425 B1**
(45) Date of publication and mention of the grant of the patent: **12.10.2005**
(21) Application number: 02007701.2
(22) Date of filing: 05.04.2002
(51) Int. Cl.: B62D 15/02, B62D 5/04

(54) **Rotational angle detecting device, torque detecting device and steering apparatus**
Sensor für Drehwinkel und Drehmoment und Lenkvorrichtung
Capteur d'angle de rotation et de couple et dispositif de direction

(30) Priority: 23.05.2001 JP 2001154606; 25.09.2001 JP 2001292535
(43) Date of publication of application: 27.11.2002
(73) Proprietor: Koyo Seiko Co., Ltd., Osaka 542-0081 (JP)
(72) Inventor: Maeda, Naoki, Koyo Seiko Co., Ltd., Osaka 542-0081 (JP)
(74) Representative: Selting, Günther

(56) References cited:
- EP-A- 1 087 218

## Description

### BACKGROUND OF THE INVENTION

### 1. Field of the Invention

The present invention relates to a rotational angle detecting device for detecting a rotational angle; a torque detecting device for detecting a torque applied to a first shaft, based on a torsional angle generated in a connecting shaft connecting the first shaft and a second shaft; and a steering apparatus for automobiles comprising this torque detecting device.

### 2. Description of Related Art

An electric power steering apparatus, which assists steering by driving an electric motor for assisting steering based on the result of the detection of a steering torque applied to a steering wheel for steering and by transmitting a rotational force of the electric motor to a steering mechanism, has the advantage of easily controlling the assisting force characteristics according to the high or low vehicle speed, the frequency of steering and the travelling state as compared to a hydraulic power steering apparatus using a hydraulic actuator as the power source of the steering assist force. For this reason, the range of its application has being expanded in recent years.

Since the electric power steering apparatus as described above needs a torque detecting device for detecting the steering torque, it uses a torque detecting device that is constructed by dividing the steering shaft connecting the steering wheel and steering mechanism into an input shaft (first shaft) on the steering wheel side and an output shaft (second shaft) on the steering mechanism side and connecting the input shaft and the output shaft through a torsion bar with a small diameter so as to detect a relative angular displacement caused at the connecting portion between the input and output shafts with torsion of the torsion bar as a result of the function of the steering torque and calculate the steering torque based on the result of this detection.

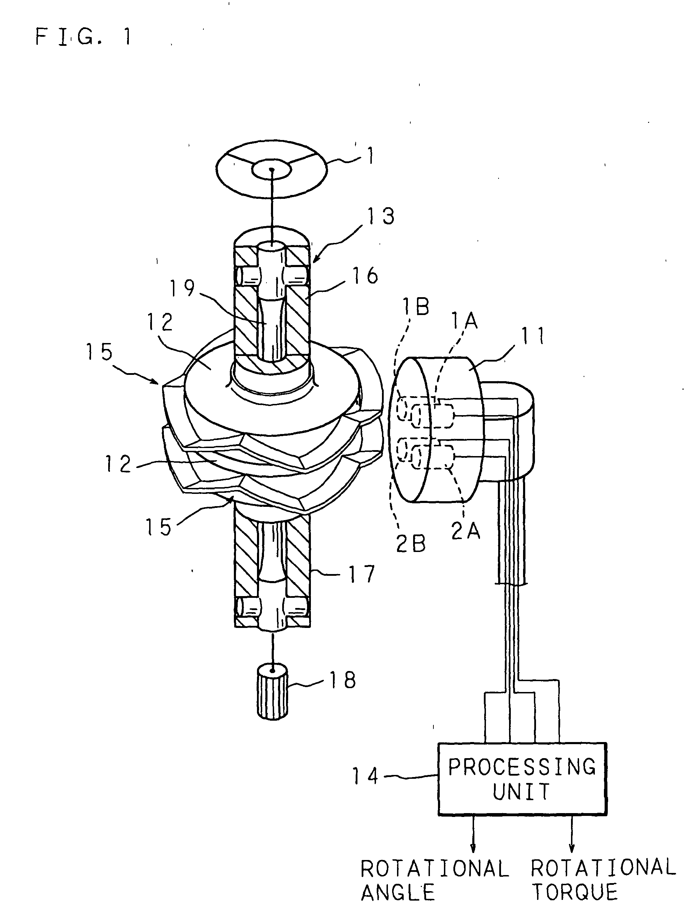

The applicant of the present application proposed a torque detecting device as described above, in Japanese Patent Application No. 2000-294731, etc. This torque detecting device is applied to a steering apparatus for automobiles in the construction schematically shown in FIG. 1. A steering shaft 13 connecting a steering wheel 1 and a steering mechanism is constructed by connecting coaxially an input shaft 16 having an upper end portion to which the steering wheel 1 is connected and an output shaft 17 having a lower end portion to which a pinion 18 of the steering mechanism is connected to each other through a torsion bar 19 with a small diameter. The torque detecting device is constructed near the connecting portion between the input shaft 16 and the output shaft 17 as follows.

A disc-shaped target plate 12 (rotational member) is coaxially fitted and secured on the input shaft 16 at a position adjacent to one end portion connected to the output shaft 17, and a plurality of (five in FIG. 1) targets 15 are provided side by side on the outer circumferential surface of the target plate 12.

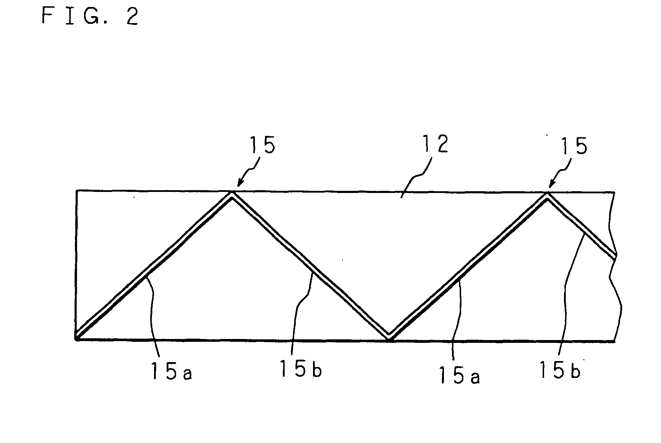

As illustrated in a development view of FIG. 2 showing the developed outer circumferential surface of the target plate 12, each target 15 is a protruding bar made of magnetic material and comprises a first inclining portion 15a arranged to incline in one direction on the outer circumferential surface of the target plate 12 and a second inclining portion 15b arranged to incline in other direction, and the targets 15 are provided side by side at equal intervals in a circumferential direction of the outer circumferential surface of the target plate 12.

The first inclining portion 15a and the second inclining portion 15b are substantially line symmetrical about a straight line passing their connected point in the axial direction of the rotational shaft of the target plate 12.

A target plate 12 with targets 15 similar to the one described above is also fitted and secured on the output shaft 17 at one end portion on the input shaft 16 side. The targets 15 of the target plate 12 on the output shaft 17 side and the targets 15 of the target plate 12 on the input shaft 16 side are aligned and juxtaposed in the circumferential direction.

A sensor box 11 is disposed outside of both the target plates 12 so that it faces the outer edges of the targets 15 on the outer circumference of the target plates 12. The sensor box 11 is fixedly supported on a stationary portion, such as a housing that supports the input shaft 16 and the output shaft 17. Magnetic sensors 1A, 1B facing different portions in the circumferential direction of the targets 15 on the input shaft 16 side and magnetic sensors 2A, 2B facing different portions in the circumferential direction of the targets 15 on the output shaft 17 side are contained in the sensor box 11 so that their positions in the circumferential direction are correctly aligned.

Each of the magnetic sensors 1A, 2A, 1B, 2B is a sensor which is constructed using an element, such as a magneto-resistance effect element (MR element), whose electrical characteristic (resistance) changes as a result of the function of a magnetic field so that the detection signal changes according to an adjacent portion of the facing target 15, and the respective detection signals are supplied to a processing unit 14 formed by a microprocessor provided outside (or inside) the sensor box 11.

The following description will explain the operations of the conventional rotational angle detecting device and torque detecting device having such structures.

As described above, the targets 15 facing the magnetic sensors 1A, 2A, 1B, 2B are protruding bars made of magnetic material, which comprise the first inclining portions 15a arranged to incline in one direction and the second inclining portions 15b arranged to incline in other direction on the outer circumferential surface of the respective target plates 12 that are coaxially fitted and secured on the input shaft 16 and the output shaft 17, and are provided side by side at equal intervals in the circumferential direction.

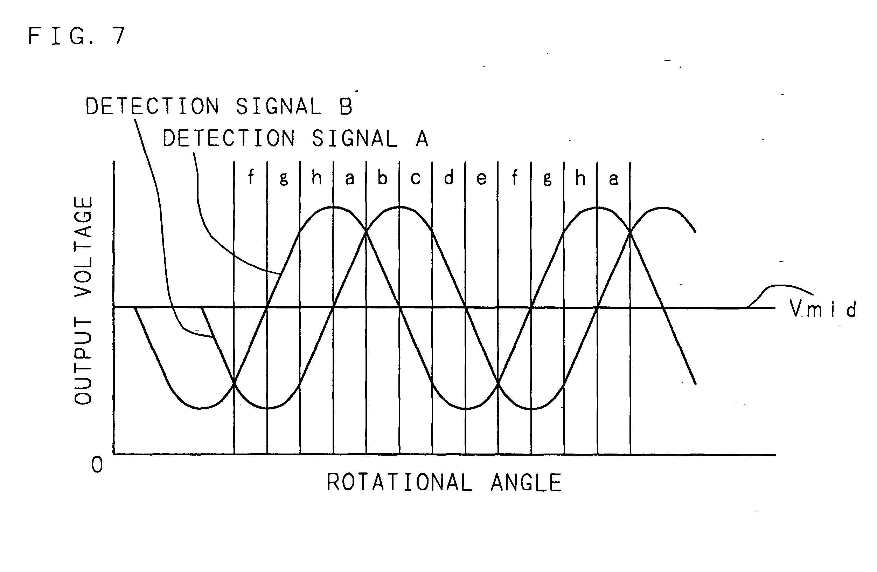

Therefore, when the input shaft 16 (output shaft 17) is rotated about the axis, each of the magnetic sensors 1A and 1B (2A and 2B) outputs a detection signal rising and falling in proportion to a change of the rotational angle of the input shaft 16 (output shaft 17) as shown in FIG. 7 while a corresponding target 15 is passing a position facing the sensor.

The detection signal changes nonlinearly near a transition from rise to fall or fall to rise, i.e., near the connected point between the first inclining portion 15a and second inclining portion 15b, but the detection signal can be complemented by a later-described method.

The detection signals of the magnetic sensors 1A and 1B correspond to the rotational angle of the input shaft 16 having the targets 15 corresponding to the magnetic sensors 1A and 1B, while the detection signals of the magnetic sensors 2A and 2B correspond to the rotational angle of the output shaft 17 having the targets 15 facing the magnetic sensors 2A and 2B.

Therefore, the processing unit 14 can calculate the rotational angle of the input shaft 16 from the detection signals of the magnetic sensors 1A and 1B, and thus the processing unit 14 and the magnetic sensors 1A and 1B act as a rotational angle detecting device for the input shaft 16. Further, the processing unit 14 can calculate the rotational angle of the output shaft 17 from the detection signals of the magnetic sensors 2A and 2B, and thus the processing unit 14 and the magnetic sensors 2A and 2B act as a rotational angle detecting device for the output shaft 17.

The magnetic sensors 1A, 2A and the magnetic sensors 1B, 2B have a phase difference of 90° in the electrical angle, for example, in the circumferential direction of the target plates 12. Therefore, the detection signal of the magnetic sensor 1A and the detection signal of the magnetic sensor 1B can be mutually complemented for the nonlinearly-changed regions, and the same thing can also be said about the detection signals of the magnetic sensors 2A and 2B.

When a steering torque is applied to the input shaft 16, a torsional angle is generated in the torsion bar 19, resulting in a difference between the rotational angles of the input shaft 16 and the output shaft 17.

Here, the difference between the detection signal of the magnetic sensor 1A and the detection signal of the magnetic sensor 2A, or the difference between the detection signal of the magnetic sensor 1B and the detection signal of the magnetic sensor 2B, corresponds to the difference in the rotational angles between the input shaft 16 and the output shaft 17 (relative angular displacement). This relative angular displacement corresponds to the torsional angle generated in the torsion bar 19 connecting the input shaft 16 and the output shaft 17, under the function of the steering torque applied to the input shaft 16. Therefore, the processing unit 14 can calculate the steering torque applied to the input shaft 16, based on the above-mentioned difference between the detection signals.

In the conventional rotational angle detecting device and torque detecting device as described above, the detection signals of the magnetic sensors 1A, 2A and the magnetic sensors 1B, 2B can be mutually complemented for the nonlinearly-changed regions. In Japanese Patent Application No. 2000-366363 (Japanese Patent Application Laid-Open No. 2001-324321), for example, the applicant of the present application proposes a rotational angle detecting device and torque detecting device for mutually complementing the respective detection signals by eliminating the nonlinearly-changed region of each detection signal, based on the relations between the respective detection signals and the middle value between the maximum and minimum values of the detection signals, a predetermined threshold greater than this middle value and a predetermined threshold smaller than this middle value, but the processing is complicated.

EP 108 7 218 A1, from which the first part of claim 1 starts, discloses a rotational angle detecting device included in a steering apparatus and a torque detecting device. The devices include a rotor having a portion, which is magnetically discontinuous in an axial and a circumferential direction of the rotor; and a magnetic sensor for detecting the position where magnetic change occurs in an axial direction of the rotating shaft when the rotor rotates, wherein a rotational angle of the rotor from the magnetic sensor as the base point is detected in accordance with the position detected by the magnetic sensor.

The present invention has been made with the aim of solving the above problems, and it is an object of the invention to provide a rotational angle detecting device capable of easily eliminating nonlinearly-changed regions of detection signals and calculating the rotational angle by simple processing.

The rotational angle detecting device of the invention is defined by claim 1.

The embodiment of claim 7 provides a torque detecting device capable of easily eliminating nonlinearly-changed regions of detection signals and calculating the steering torque by simple processing.

The embodiment of claim 8 provides a steering apparatus comprising the torque detecting device of claim 7.

### BRIEF SUMMARY OF. THE INVENTION

A rotational angle detecting device according to claim 1 is a rotational angle detecting device, comprising a rotational member; a target provided on the rotational member; first detecting means disposed to face the target so as to output a detection signal according to a rotation of the rotational member; and second detecting means disposed to face the target so as to output a detection signal whose phase is different from the detection signal outputted by the first detecting means by a predetermined electrical angle; whereby a displacement angle in a direction of rotation of the rotational member is detected based on the detection signals outputted by the first detecting means and the second detecting means, and is characterized by further comprising: first judging means for judging whether each of the detection signal outputted by the first detecting means and the detection signal outputted by the second detecting means is greater or less than a substantially middle value between maximum and minimum values to be taken by the detection signals; second judging means for judging a relation in magnitude between the detection signal outputted by the first detecting means and the detection signal outputted by the second detecting means; and third judging means for judging magnitudes of differences between each of the detection signals and the substantially middle value; wherein the displacement angle in the direction of rotation of the rotational member is detected based on results of judgments by the first judging means, second judging means and third judging means.

In this rotational angle detecting device of claim 1, in accordance with the rotation of the rotational member, the first detecting means disposed to face the target outputs a detection signal and further the second detecting means disposed to face the target outputs a detection signal whose phase is different from the detection signal outputted by the first detecting means by a predetermined electrical angle, and a detection signal approximately to a sine wave or a triangular wave can be obtained based on the detection signals outputted by the first detecting means and the second detecting means, respectively.

The first judging means judges whether each of the detection signals outputted by the first detecting means and the second detecting means is greater or less than the substantially middle value between the maximum and minimum values to be taken by the detection signals, the second judging means judges a relation in magnitude between the detection signals outputted by the first detecting means and the second detecting means, the third judging means judges the magnitudes of the differences between each of the detection signals and the substantially middle value, and the displacement angle in the direction of rotation of the rotational member is detected based on the results of the judgments by the first judging means, second judging means and third judging means.

Accordingly, it is possible to easily eliminate a portion near a distorted region of a detection signal approximately to a sine wave or a triangular wave where a maximum nonlinear change rate is marked, thereby realizing a rotational angle detecting device capable of calculating the rotational angle by simple processing.

A rotational angle detecting device according to claim 2 is characterized in that a plurality of the targets are provided with a space therebetween in a circumferential direction of the rotational member.

In this rotational angle detecting device of claim 2, since a plurality of the targets are provided with a space therebetween in the circumferential direction of the rotational member, it is possible to improve the detection sensitivity and easily eliminate a portion near a distorted region of a detection signal where a maximum nonlinear change rate is marked, thereby realizing a rotational angle detecting device capable of calculating the rotational angle by simple processing.

A rotational angle detecting device according to claim 3 is characterized in that the target is magnetically discontinuous with respect to a peripheral portion, and the first detecting means and the second detecting means are magnetic sensors.

In this rotational angle detecting device of claim 3, since the target is magnetically discontinuous with respect to a peripheral portion and the first detecting means and second detecting means are magnetic sensors, it is possible to readily form the target, achieve easy handling and a reduction in the costs of the parts and easily eliminate a nonlinearly-changed region of a detection signal or a portion near a distorted region where a maximum nonlinear change rate is marked, thereby realizing a rotational angle detecting device capable of calculating the rotational angle by simple processing.

A rotational angle detecting device according to claim 4 is characterized in that the targets are made of protrusions arranged at substantially equally intervals in the circumferential direction of the rotational member.

In this rotational angle detecting device of claim 4, since the targets are made of protrusions arranged at substantially equally intervals in the circumferential direction of the rotational member, it is possible to readily obtain the targets by gear-cutting the circumferential surface of the rotational member, for example, and achieve a reduction in the costs. Moreover, it is possible to easily eliminate a portion near a distorted region of a detection signal where a maximum nonlinear change rate is marked, thereby realizing a rotational angle detecting device capable of calculating the rotational angle by simple processing.

A rotational angle detecting device according to claim 5 is characterized in that the targets are made of non-dent portions between dents formed at substantially equal intervals in the circumferential direction of the rotational member so as to form the non-dent portions.

In this rotational angle detecting device of claim 5, since the targets are made of non-dent portions between dents formed at substantially equal intervals in the circumferential direction of the rotational member so as to form the non-dent portions, it is possible to readily obtain the targets by providing a cylindrical portion on the rotational member and forming dents made of through holes in the cylindrical portion, for example, and achieve a reduction in the costs. Moreover, it is possible to easily eliminate a portion near a distorted region of a detection signal where a maximum nonlinear change rate is marked, thereby realizing a rotational angle detecting device capable of calculating the rotational angle by simple processing.

A rotational angle detecting device according to claim 6 is characterized in that the targets are magnetized so that magnetic poles reverse at substantially equal intervals in a circumferential direction of the rotational member.

In this rotational angle detecting device of claim 6, since the targets are magnetized so that the magnetic poles reverse at substantially equal intervals in the circumferential direction of the rotational member, it is possible to readily obtain the targets as compared to the case where a target made of a permanent magnet is provided on the rotational member. Moreover, it is possible to easily eliminate a portion near a distorted region of a detection signal where a maximum nonlinear change rate is marked, thereby realizing a rotational angle detecting device capable of calculating the rotational angle by simple processing.

A torque detecting device according to claim 7 is a torque detecting device for detecting a torque applied to a first shaft, based on a torsional angle generated in a connecting shaft connecting coaxially the first shaft and a second shaft, characterized by comprising rotational angle detecting devices of any one of first through eleven inventions, attached to the first shaft and second shaft, respectively, wherein a difference between displacement angles detected by the rotational angle detecting devices respectively is made to be the torsional angle.

In this torque detecting device of claim 7, a torque applied to the first shaft is detected by the torsional angle generated in the connecting shaft connecting coaxially the first shaft and second shaft. The rotational angle detecting devices of any one of the first through eleventh inventions are attached to the first shaft and second shaft respectively, and the difference between displacement angles detected by the rotational angle detecting devices respectively is the torsional angle.

Accordingly, it is possible to easily eliminate a nonlinearly-changed region of a detection signal or a portion near a distorted region where a maximum nonlinear change rate is marked, thereby realizing a torque detecting device capable of calculating the steering torque by simple processing.

A steering apparatus according to claim 8 is characterized by comprising: a first shaft connected to a steering wheel; a steering assist electric motor driven and controlled based on a steering torque applied to the steering wheel; a second shaft interlocked with the electric motor; and a torque detecting device of the twelfth invention for detecting a steering torque applied to the first shaft, based on a torsional angle generated in a connecting shaft connecting the first shaft and the second shaft.

In this steering apparatus of claim 8, the first shaft is connected to the steering wheel, and the steering assist electric motor is driven and controlled based on the steering torque applied to the steering wheel. Since the second shaft is interlocked with the electric motor and the steering torque applied to the first shaft is detected by the torsional angle generated in the connecting shaft connecting the first shaft and the second shaft, it is possible to realize a steering apparatus comprising the torque detecting device of claim 7.

The above and further objects and features of the invention will more fully be apparent from the following detailed description with accompanying drawings.

### BRIEF DESCRIPTION OF THE SEVERAL VIEWS OF THE DRAWINGS

FIG. 1 is a schematic view showing the construction commonly adopted by Embodiment 1 of a rotational angle detecting device and torque detecting device according to the present invention and the above-mentioned prior art;
FIG. 2 is a development view showing the developed outer circumferential surface of a target plate of the rotational angle detecting device shown in FIG. 1;
FIG. 3 is a flow chart showing the steering angle calculating operation of the rotational angle detecting device shown in FIG. 1;
FIG. 4 is a flow chart showing the steering angle calculating operation of the rotational angle detecting device shown in FIG. 1;
FIG. 5 is a flow chart showing the steering angle calculating operation of the rotational angle detecting device shown in FIG. 1;
FIG. 6 is a flow chart showing the steering angle calculating operation of the rotational angle detecting device shown in FIG. 1;
FIG. 7 is a waveform chart showing an example of the detection signals commonly detected by a rotational angle detecting device according to the present invention and the above-mentioned prior art;
FIG. 8 is a vertical cross sectional view showing the construction of an essential portion of Embodiment 2 of a steering apparatus according to the present invention;
FIG. 9 is a schematic view showing the construction of Embodiment 3 of the rotational angle detecting device and torque detecting device according to the present invention;
FIG. 10 is a schematic view showing the construction of Embodiment 4 of the rotational angle detecting device and torque detecting device according to the present invention;
FIG. 11 is a cross sectional view showing the construction of Embodiment 4 of the rotational angle detecting device and torque detecting device according to the present invention;
FIG. 12 is a schematic view showing the construction of Embodiment 5 of the rotational angle detecting device and torque detecting device according to the present invention;
FIG. 13 is a plan view of a target portion that shows the construction of Embodiment 5 of the rotational angle detecting device and torque detecting device according to the present invention; and
FIG. 14 is a schematic view showing the construction of Embodiment 6 of the rotational angle detecting device and torque detecting device according to the present invention.

### DETAILED DESCRIPTION OF THE PREFERRED EMBODIMENTS

The following description will explain the present invention with reference to the drawings illustrating some embodiments thereof.

### Embodiment 1

FIG. 1 is a schematic view showing the construction of Embodiment 1 of a rotational angle detecting device and torque detecting device according to the present invention. Note that, the mechanical construction itself of the rotational angle detecting device and torque detecting device according to the present invention is as same as that of above-mentioned prior art. These rotational angle detecting device and torque detecting device are applied to a steering apparatus for automobiles, in which a steering shaft 13 connecting coaxially a steering wheel 1 and a steering mechanism is constructed by connecting an input shaft 16 having an upper end portion to which the steering wheel 1 is connected and an output shaft 17 having a lower end portion to which a pinion 18 of the steering mechanism is connected to each other through a torsion bar (connecting shaft) 19 with a small diameter, and the torque detecting device is constructed near the connecting portion between the input shaft 16 and the output shaft 17 as follows.

A disc-shaped target plate 12 (rotational member) is coaxially fitted and secured on the input shaft 16 at a position adjacent to one end portion connected to the output shaft 17, and a plurality of (five in FIG. 1) targets 15 are provided side by side on the outer circumferential surface of the target plate 12.

As illustrated in a development view of FIG. 2 showing the developed outer circumferential surface of the target plate 12, each target 15 is a protruding bar made of magnetic material and comprises a first inclining portion 15a arranged to incline in one direction and a second inclining portion 15b arranged to incline in other direction on the outer circumferential surface of the target plate 12, and the targets 15 are provided side by side at equal intervals in the circumferential direction of the outer circumferential surface of the target plate 12.

The first inclining portion 15a and the second inclining portion 15b are substantially line symmetrical about a straight line passing their connected point in the axial direction of the rotational shaft of the target plate 12.

A target plate 12 with targets 15 similar to the one described above is also fitted and secured on the output shaft 17 at one end portion on the input shaft 16 side, and the targets 15 of the target plate 12 on the output shaft 17 side and the targets 15 of the target plate 12 on the input shaft 16 side are aligned and juxtaposed in the circumferential direction.

A sensor box 11 is disposed outside of both the target plates 12 so that it faces the outer edges of the targets 15 on the outer circumference of the target plates 12. The sensor box 11 is fixedly supported on a stationary portion, such as a housing that supports the input shaft 16 and the output shaft 17. Magnetic sensors 1A, 1B facing different portions in the circumferential direction of the targets 15 on the input shaft 16 side and magnetic sensors 2A, 2B facing different portions in the circumferential direction of the targets 15 on the output shaft 17 side are contained in the sensor box 11 so that their positions in the circumferential direction are correctly aligned.

Each of the magnetic sensors 1A, 2A, 1B, 2B is a sensor which is constructed using an element, such as a magneto-resistance effect element (MR element), whose electrical characteristic (resistance) changes as a result of the function of a magnetic field so that the detection signal changes according to an adjacent portion of the facing target 15, and the respective detection signals are supplied to a processing unit 14 formed by a microprocessor provided outside (or inside) the sensor box 11.

The following description will explain the operations of the rotational angle detecting device and torque detecting device having such structures.

As described above, the targets 15 facing the magnetic sensors 1A, 2A, 1B, 2B are protruding bars made of magnetic material, comprise the first inclining portions 15a arranged to incline in one direction and the second inclining portions 15b arranged to incline in other direction on the outer circumferential surfaces of the target plates 12 that are coaxially fitted and secured on the input shaft 16 and the output shaft 17, and are provided side by side at equal intervals in the circumferential direction.

Therefore, when the input shaft 16 (output shaft 17) is rotated about the axis, each of the magnetic sensors 1A and 1B (2A and 2B) outputs a detection signal rising and falling in proportion to a change of the rotational angle of the input shaft 16 (output shaft 17) as shown in FIG. 7 while a corresponding target 15 is passing a position facing the sensor.

The detection signal changes nonlinearly near a transition from rise to fall or fall to rise, i.e., near the connected point between the first inclining portion 15a and the second inclining portion 15b, but the detection signal can be complemented by a later-described method.

The detection signals of the magnetic sensors 1A and 1B correspond to the rotational angle of the input shaft 16 having the targets 15 corresponding to the magnetic sensors 1A and 1B, while the detection signals of the magnetic sensors 2A and 2B correspond to the rotational angle of the output shaft 17 having the targets 15 corresponding to the magnetic sensors 2A and 2B.

Therefore, the processing unit 14 can calculate the rotational angle of the input shaft 16 from the detection signals of the magnetic sensors 1A and 1B, and thus the processing unit 14 and magnetic sensors 1A and 1B act as a rotational angle detecting device for the input shaft 16. Further, the processing unit 14 can calculate the rotational angle of the output shaft 17 from the detection signals of the magnetic sensors 2A and 2B, and thus the processing unit 14 and magnetic sensors 2A and 2B act as a rotational angle detecting device for the output shaft 17.

The magnetic sensors 1A, 2A and the magnetic sensors 1B, 2B have a phase difference of 90° in the electrical angle, for example, in the circumferential direction of the target plates 12. Therefore, the detection signal of the magnetic sensor 1A and the detection signal of the magnetic sensor 1B can be mutually complemented for the nonlinearly-changed regions, and the same thing can also be said about the detection signals of the magnetic sensors 2A and 2B.

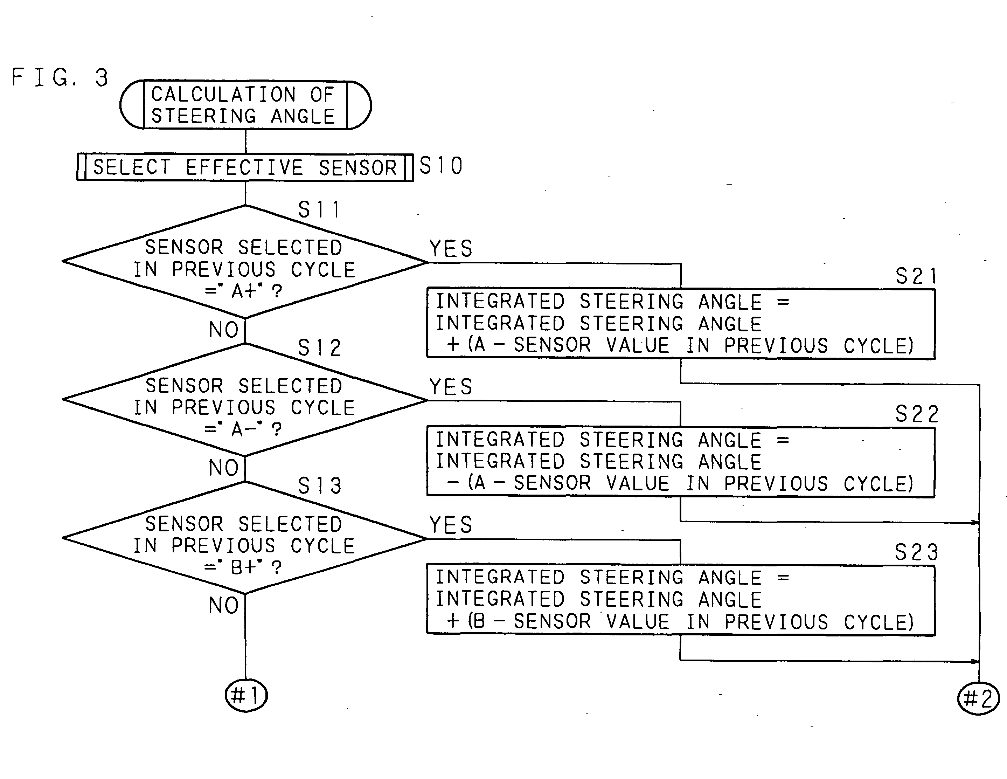

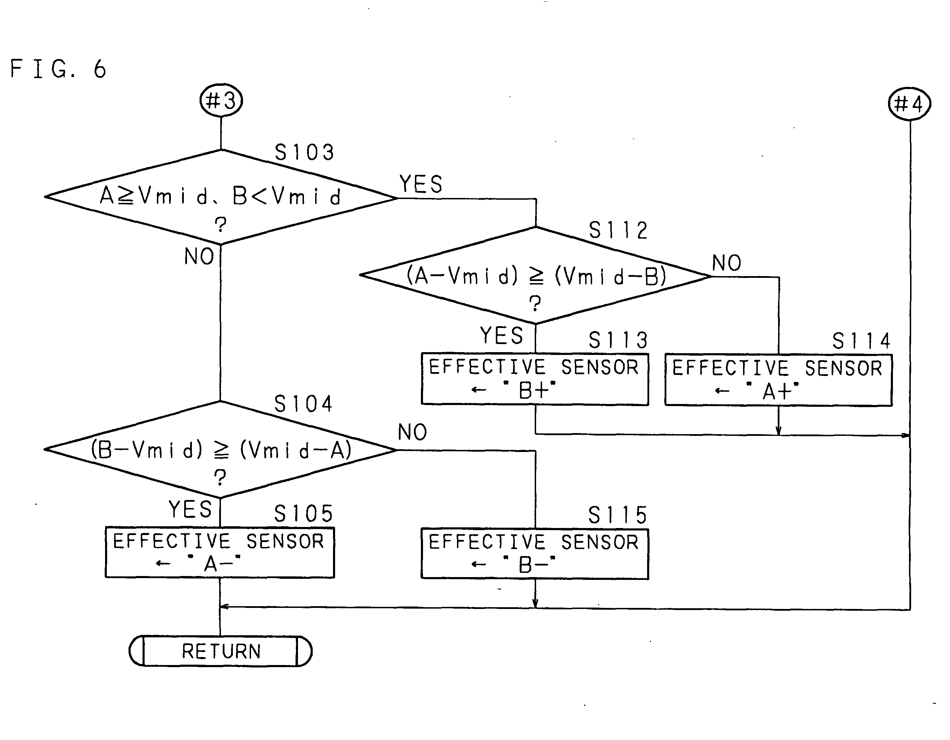

The following description will explain the operation of calculating the steering angle (rotational angle calculation) of the rotational angle detecting device according to the present invention, with reference to the flow charts of FIG. 3, FIG. 4, FIG. 5 and FIG. 6 showing the operation.

In this rotational angle detecting device, first, the processing unit 14 selects an effective sensor whose detection signal is not in a nonlinearly-changed region from magnetic sensor A (magnetic sensors 1A, 2A) and magnetic sensor B (magnetic sensors 1B, 2B) (S10). Here, a judgement is also made as to whether the effective sensor is a magnetic sensor "A+", "B+" whose detection signal is in a rightward-rising region (detection signal increasing region) or a magnetic sensor "A-", "B-" whose detection signal is in a rightward-falling region (detection signal decreasing region).

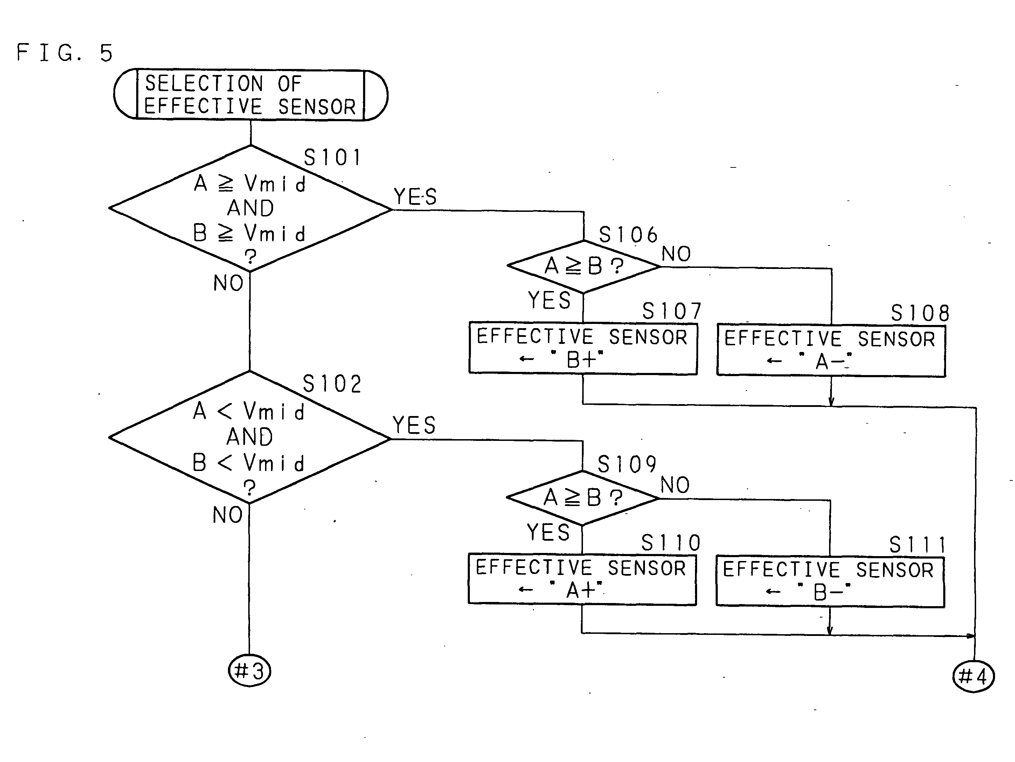

For the selection of the effective sensor (S10), the processing unit 14 first compares each of the detection signals A and B of the magnetic sensors A and B with the middle value Vmid of the maximum and minimum values that can be taken by the detection signals A and B so as to judge whether or not A ≥ Vmid and B ≥ Vmid are satisfied (S101 in FIG. 5). If A ≥ Vmid and B ≥ Vmid, the processing unit 14 judges whether or not A ≥ B is satisfied (S106).

If A ≥ Vmid and B ≥ Vmid are satisfied (S101) and A ≥ B is satisfied (S106), the processing unit 14 judges that the detection signals A and B are in a region "a" shown in FIG. 7 and selects the effective sensor "B+" (S107).

If A ≥ Vmid and B ≥ Vmid are satisfied (S101) but A ≥ B is not satisfied (S106), the processing unit 14 judges that the detection signals A and B are in a region "b" shown in FIG. 7 and selects the effective sensor "A-" (S108).

If A ≥ Vmid and B ≥ Vmid are not satisfied (S101), the processing unit 14 judges whether or not A < Vmid and B < Vmid are satisfied(S102). If A ≤ Vmid and B ≤ Vmid are satisfied, the processing unit 14 judges whether or not A ≥ B (S109) is satisfied.

If A < Vmid and B < Vmid are satisfied (S102) and A ≥ B is satisfied (S109), the processing unit 14 judges that the detection signals A and B are in a region "f' shown in FIG. 7 and selects the effective sensor "A+" (S110).

If A < Vmid and B < Vmid are satisfied (S102) but A ≥ B is not satisfied (S109), the processing unit 14 judges that the detection signals A and B are in a region "e" shown in FIG. 7 and selects the effective sensor "B-" (S111).

If A < Vmid and B < Vmid are not satisfied (S102), the processing unit 14 judges whether or not A ≥ Vmid and B < Vmid are satisfied (S103). If A ≥ Vmid and B < Vmid are satisfied, the processing unit 14 judges whether or not (A - Vmid) ≥ (Vmid - B) is satisfied (S112).

If A ≥ Vmid and B < Vmid are satisfied (S103) and (A - Vmid) ≥ (Vmid - B) is satisfied (S112), the processing unit 14 judges that the detection signals A and B are in a region "h" shown in FIG. 7 and selects the effective sensor "B+" (S113).

If A ≥ Vmid and B < Vmid are satisfied (S103) but (A - Vmid) ≥ (Vmid - B) is not satisfied (S112), the processing unit 14 judges that the detection signals A and B are in a region "g" shown in FIG. 7 and selects the effective sensor "A+" (S114).

If A ≥ Vmid and B < Vmid are not satisfied (S103), the processing unit 14 judges whether or not (B - Vmid) ≥ (Vmid - A) is satisfied (S104).

If A ≥ Vmid and B < Vmid are not satisfied (S103) but (B - Vmid) ≥ (Vmid - A) is satisfied (S104), the processing unit 14 judges that the detection signals A and B are in a region "c" shown in FIG. 7 and selects the effective sensor "A-" (S105). If A ≥ Vmid and B < Vmid are not satisfied (S103) and (B - Vmid) ≥ (Vmid - A) is not satisfied (S104), the processing unit 14 judges that the detection signals A and B are in a region "d" shown in FIG. 7 and selects the effective sensor "B-" (S115).

Next, the processing unit 14 judges whether or not the effective sensor selected in the previous cycle of sampling was "A+" (S11). If the effective sensor in the previous cycle of sampling was "A+", the processing unit 14 adds the change of the detection signal indicating the displacement angle from the previous cycle of sampling to this cycle of sampling (A - the sensor value in the previous cycle) to the integrated steering angle up to the previous cycle of sampling and outputs the result as the rotational angle (S21).

In this case, since the effective sensor in the previous cycle of sampling was "A+" and the detection signal value A was in a linear region, the detection signal value A of the effective sensor "A+" will not come into a nonlinearly-changed region until this cycle of sampling. Accordingly, since the increase/decrease of the detection signal value corresponds to the increase/decrease of the integrated steering angle, the change of the detection signal is added to the integrated steering angle, and the change of the detection signal can be calculated from the detection signal value A of this cycle of sampling.

If the effective sensor in the previous cycle of sampling was not "A+" (S11), the processing unit 14 judges whether or not the effective sensor in the previous cycle of sampling was "A-" (S12).

If the effective sensor in the previous cycle of sampling was "A-" (S12), the processing unit 14 subtracts the change of the detection signal indicating the displacement angle from the previous cycle of sampling to this cycle of sampling (A - the sensor value in the previous cycle) from the integrated steering angle up to the previous cycle of sampling and outputs the result as the rotational angle (S22).

In this case, since the effective sensor in the previous cycle of sampling was "A-" and the detection signal value A was in a linear region, the detection signal value A of the effective sensor "A-" will not come into a nonlinearly-changed region until this cycle of sampling. Accordingly, since the increase/decrease of the detection signal value corresponds to the decrease/increase of the integrated steering angle, the change of the detection signal is subtracted from the integrated steering angle, and the change of the detection signal can be calculated from the detection signal A of this cycle of sampling.

If the effective sensor in the previous cycle of sampling was not "A-" (S12), the processing unit 14 judges whether or not the effective sensor in the previous cycle of sampling was "B+" (S13).

If the effective sensor in the previous cycle of sampling was "B+" (S13), the processing unit 14 adds the change of the detection signal indicating the displacement angle from the previous cycle of sampling to this cycle of sampling (B - the sensor value in the previous cycle) to the integrated steering angle up to the previous cycle of sampling and outputs the result as the rotational angle (S23).

In this case, since the effective sensor in the previous cycle of sampling was "B+" and the detection signal value B was in a linear region, the detection signal value B of the effective sensor "B+" will not come into a nonlinearly-changed region until this cycle of sampling. Accordingly, since the increase/decrease of the detection signal value corresponds to the increase/decrease of the integrated steering angle, the change of the detection signal is added to the integrated steering angle, and the change of the detection signal can be calculated from the detection signal B of this cycle of sampling.

If the effective sensor in the previous cycle of sampling was not "B+" (S13), the processing unit 14 judges whether or not the effective sensor in the previous cycle of sampling was "B-" (S14).

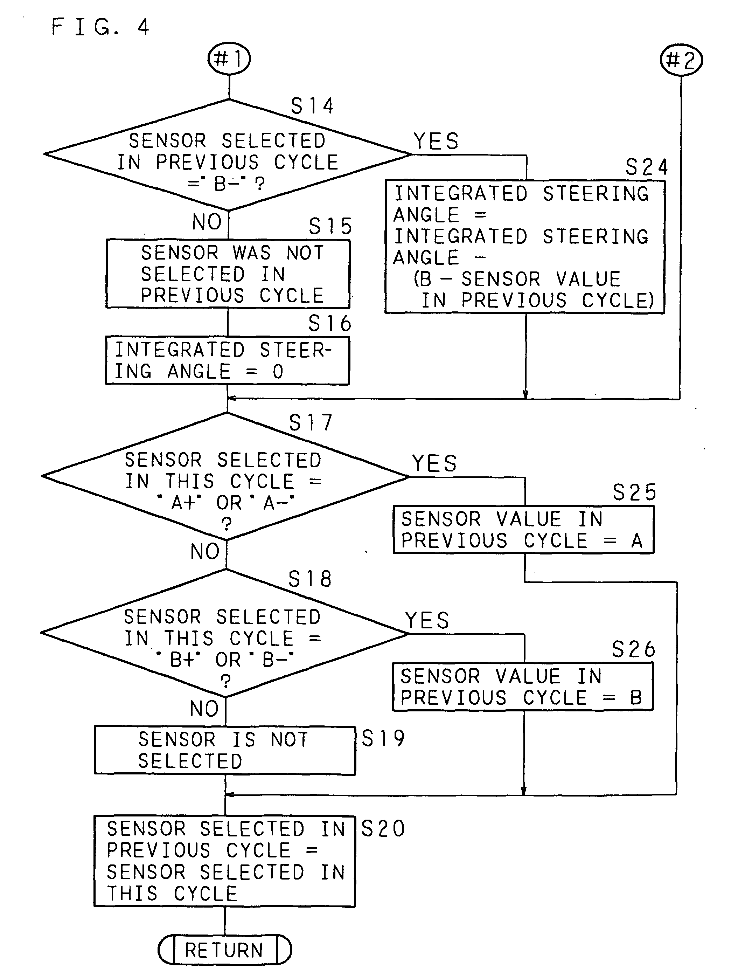

If the effective sensor in the previous cycle of sampling was "B-" (S14 of FIG. 4), the processing unit 14 subtracts the change of the detection signal indicating the displacement angle from the previous cycle of sampling to this cycle of sampling (B - the sensor value in the previous cycle) from the integrated steering angle up to the previous cycle of sampling and outputs the result as the rotational angle (S24).

In this case, since the effective sensor in the previous cycle of sampling was "B-" and the detection signal value B was in a linear region, the detection signal value B of the effective sensor "B-" will not come into a nonlinearly-changed region until this cycle of sampling. Accordingly, since the increase/decrease of the detection signal value corresponds to the decrease/increase of the integrated steering angle, the change of the detection signal is subtracted from the integrated steering angle, and the change of the detection signal can be calculated from the detection signal B of this cycle of sampling.

If the effective sensor in the previous cycle of sampling was not "B-" (S14), the processing unit 14 judges that the effective sensor was not selected in the previous cycle of sampling (S15), i.e., it was steering start time and thus the steering angle is zero, and outputs this value as the rotational angle (S16).

Next, if the effective sensor in this cycle of sampling is "A+" or "A-" (S17), the processing unit 14 selects the detection signal value A of this cycle of sampling (S25) as the "sensor value in the previous cycle" for use in the operations (S21, S22, S23, S24), and replaces the "sensor selected in the previous cycle" with the "sensor selected in this cycle" (S20) and performs return.

If the effective sensor in this cycle of sampling is not "A+" or "A-" (S17), the processing unit 14 judges whether or not the effective sensor selected in this cycle of sampling is "B+" or "B-" (S18).

If the effective sensor selected in this cycle of sampling is "B+" or "B-" (S18), the processing unit 14 selects the detection signal value B of this cycle of sampling (S26) as the "sensor value in the previous cycle" for use in the operations (S21, S22, S23, S24), and replaces the "sensor selected in the previous cycle" with the "sensor selected in this cycle" (S20) and performs return.

If the effective sensor selected in this cycle of sampling is not "B+" or "B-" (S18), the processing unit 14 judges that the effective sensor is not selected (S19), and selects "sensor is not selected" for the "sensor selected in the previous cycle" (S20) and performs return.

If the steering torque is applied to the input shaft 16, a torsional angle is generated in the torsion bar 19, resulting in a difference between the rotational angles of the input shaft 16 and output shaft 17.

Here, the difference between the detection signal of the magnetic sensor 1A and the detection signal of the magnetic sensor 2A, or the difference between the detection signal of the magnetic sensor 1B and the detection signal of the magnetic sensor 2B, corresponds to the difference in the rotational angles between the input shaft 16 and the output shaft 17 (relative angular displacement). This relative angular displacement corresponds to the torsional angle generated in the torsion bar 19 connecting the input shaft 16 and the output shaft 17 under the function of the steering torque applied to the input shaft 16. Therefore, the processing unit 14 can calculate the steering torque applied to the input shaft 16, based on the above-mentioned difference between the detection signals.

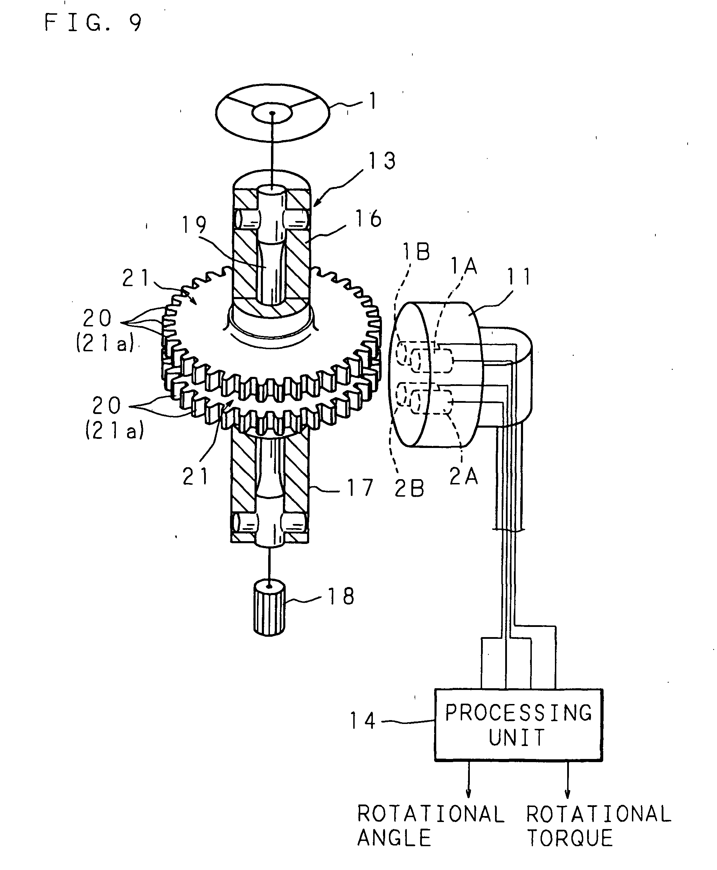

Note that while Embodiment 1 illustrated above explains the present invention comprising the targets 15 of the configuration shown in FIG. 2, it is also possible to obtain similar effects even when the targets 15 have configurations other than the one shown in FIG. 2, for example, the configurations shown in FIG. 9, FIG. 10, FIG. 11, FIG. 12, FIG. 13 and FIG. 14.

### Embodiment 2

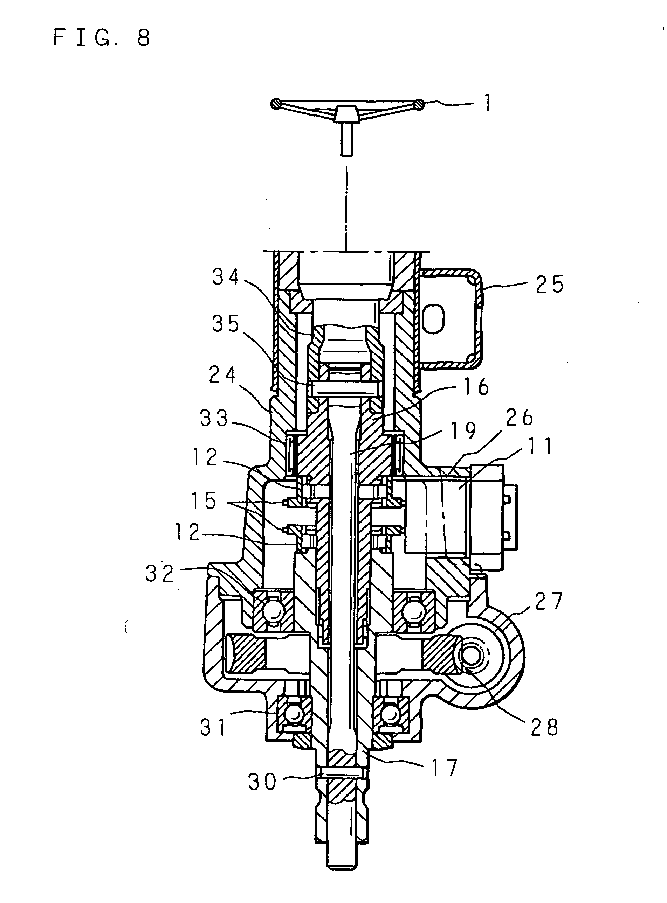

FIG. 8 is a vertical cross sectional view showing the construction of an essential portion of Embodiment 2 of a steering apparatus according to the present invention. This steering apparatus comprises an upper shaft 34 having an upper end portion to which a steering wheel 1 is attached and a lower end portion to which a cylindrical input shaft 16 and the upper end portion of a torsion bar 19 (connecting shaft) to be inserted into the input shaft 16 are connected through a first dowel pin 35. A cylindrical output shaft 17 is connected to the lower end portion of the torsion bar 19 through a second dowel pin 30. The upper shaft 34, input shaft 16 and output shaft 17 are rotatably supported in a housing 24 through bearings 33, 32 and 31, respectively.

The housing 24 is fixed to a stationary portion of the body of an automobile with a mounting bracket 25.

The housing 24 contains therein the sensor box 11 of the torque detecting device explained in Embodiment 1, for detecting a steering torque by the relative angular displacement of the input shaft 16 and the output shaft 17 connected through the torsion bar 19; and a reduction mechanism 28 for reducing the rotation of a steering assist electric motor 27 which is driven based on the result of the detection by the torque detecting sensor so as to assist the operation of the steering mechanism according to the rotation of the steering wheel 1 by the rotation of the electric motor 27 and reduce a driver's load for steering. The lower end portion of the output shaft 17 is connected to a rack and pinion type steering mechanism through a universal joint.

In the torque detecting device, as explained in Embodiment 1, the disc-shaped target plate 12 (rotational member) is coaxially fitted and secured on the input shaft 16 at a position adjacent to one end portion connected to the output shaft 17, and a plurality of targets 15 are provided side by side on the outer circumferential surface of the target plate 12.

A target plate 12 with targets 15 similar to the one described above is also fitted and secured on the output shaft 17 at one end portion on the input shaft 16 side. The targets 15 of the target plate 12 on the output shaft 17 side and the targets 15 of the target plate 12 on the input shaft 16 side are aligned and juxtaposed in the circumferential direction.

The sensor box 11 is disposed outside of both the target plates 12 so that it faces the outer edges of the targets 15 on the outer circumference of the target plates 12. The sensor box 11 is fixedly supported by being fitted into a through hole 26 formed in the housing 24.

As explained in Embodiment 1, the magnetic sensors 1A, 1B facing different portions in the circumferential direction of the targets 15 on the input shaft 16 side and the magnetic sensors 2A, 2B facing different portions in the circumferential direction of the targets 15 on the output shaft 17 side are contained in the sensor box 11 so that their positions in the circumferential direction are correctly aligned.

The following description will explain the operation of the steering apparatus having such a structure.

When the input shaft 16 and the output shaft 17 are rotated without twisting the torsion bar 19, the input shaft 16, output shaft 17 and torsion bar 19 rotate as one body.

In the case where the torsion bar 19 is twisted and the input shaft 16 and the output shaft 17 are rotated as a result of the application of a steering torque to the steering wheel 1, the detection signals of the magnetic sensors 1A, 1B, 2A, 2B have a voltage difference according to the torsional angle. The respective detection signals are supplied to the processing unit 14 (FIG. 1), and the processing unit 14 can give the torsional angle by calculating the voltage difference thereof and outputs a signal corresponding to the steering torque.

Moreover, the processing unit 14 can calculate and output the rotational angle (steering angle) of the steering wheel 1 by using the detection signals.

The signal corresponding to the steering torque and the signal indicating the rotational angle of the steering wheel 1 are supplied to a controller (not shown), and the controller controls the rotation of the electric motor 27 based on the supplied signals.

### Embodiment 3

FIG. 9 is a schematic view showing the construction of Embodiment 3 of the rotational angle detecting device and torque detecting device according to the present invention.

In the rotational angle detecting device and torque detecting device of Embodiment 3, in place of the targets 15 having the first inclining portions 15a and the second inclining portions 15b, targets 20 are formed by protrusions made of magnetic material and arranged at substantially equal intervals in the direction of rotation of the rotational member comprising the input shaft 16 and output shaft 17.

The targets 20 are made of teeth 21a of a magnetic spur gear 21 having an involute tooth profile, and ring-shaped spur gears 21 are fitted and secured on the input shaft 16 and the output shaft 17. Further, it is also possible that the input shaft 16 and the output shaft 17 are formed using magnetic material and the teeth 21a are formed by gear-cutting the circumferential surfaces of these input shaft 16 and the output shaft 17.

The magnetic sensors 1A, 2A and the magnetic sensors 1B, 2B, which are positioned at different portions in the circumferential direction of the rotational member to face the targets 20 and output detection signals continuously according to the rotation of the rotational member, have a phase difference of 90° in the electrical angle, for example, in the circumferential direction of the rotational member comprising the input shaft 16 and output shaft 17. Therefore, the detection signal of the magnetic sensor 1A and the detection signal of the magnetic sensor 1B can be mutually complemented for portions near the distorted regions where a maximum nonlinear change rate is marked, and the same thing can also be said about the detection signals of the magnetic sensors 2A and 2B.

In Embodiment 3, the magnetic field becomes stronger in opposing portions where the targets 20 face the magnetic sensors 1A, 2A, 1B, 2B that are positioned outside of the radial direction of the input shaft 16 and the output shaft 17 to face the targets 20, while the magnetic field becomes weaker in non-opposing portions. Thus, since a strong magnetic field portion and a weak magnetic field portion are periodically generated, each of the magnetic sensors 1A, 2A, 1B, 2B outputs a detection signal approximately to a sine wave according to the passage of each target 20.

The detection signals have the maximum nonlinear change rate near the transition from rise to fall or fall to rise, but can be mutually complemented by the above-described signal processing method.

Since other structures and functions are the same as those of Embodiment 1, similar parts are designated with the same reference codes, and their detailed explanation and the explanation of the functions are omitted.

### Embodiment 4

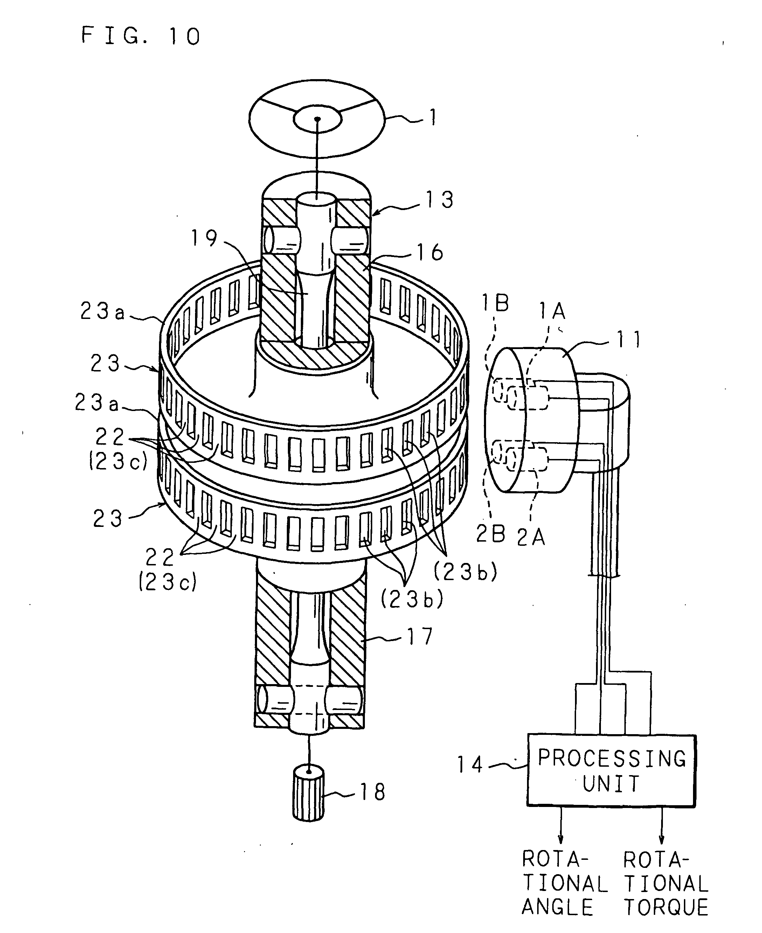

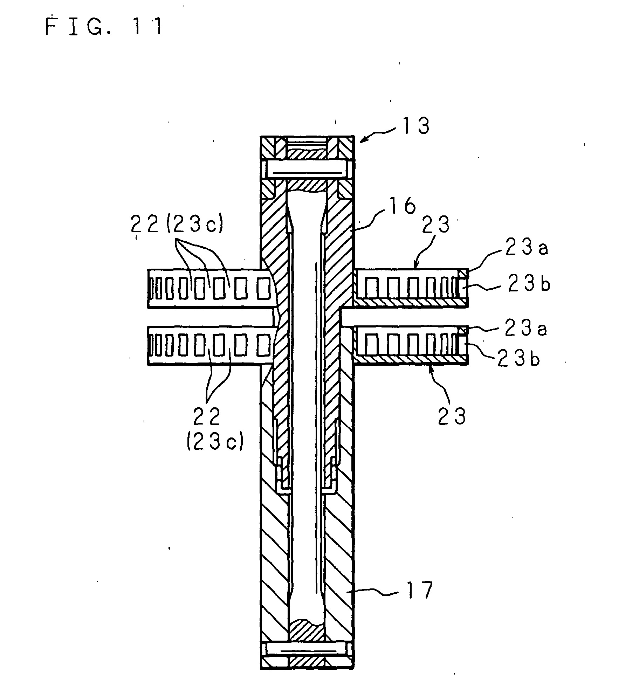

FIG. 10 is a schematic view showing the construction of Embodiment 4 of the rotational angle detecting device and torque detecting device according to the present invention; and FIG. 11 is a cross sectional view showing the construction of Embodiment 4.

In the rotational angle detecting device and torque detecting device of Embodiment 4, in place of the targets 15 having the first inclining portions 15a and the second inclining portions 15b, targets 22 are constructed by non-dent portions between dents that are formed at substantially equal intervals in the direction of rotation of the rotational member comprising the input shaft 16 and output shaft 17 so as to form the non-dent portions.

The targets 22 are made of non-dent portions 23c between dents 23b made of rectangular through holes formed in cylindrical portions 23a of rotational members 23 made of magnetic material, which are fitted and secured on the input shaft 16 and the output shaft 17 and have the cylindrical portions 23a. The non-dent portions are formed so that each of the magnetic sensors 1A, 2A, 1B, 2B can output a detection signal approximately to a sine wave or a triangular wave. Note that each dent 23b may be a non-through hole instead of the through hole. Moreover, by using the input shaft 16 and the output shaft 17 made of magnetic material, it is possible to form the dents 23b in the circumferential surfaces of the input shaft 16 and the output shaft 17. Further, it is also possible to form the dents 23b in surfaces lying in the radial direction of the input shaft 16 and the output shaft 17 instead of the circumferential surfaces round the center of rotation of the input shaft 16 and the output shaft 17. In this case, each of the magnetic sensors 1A, 2A, 1B, 2B is provided at a position facing the surface lying in the radial direction.

The magnetic sensors 1A, 2A and the magnetic sensors 1B, 2B, which are positioned at different portions in the circumferential direction of the rotational members 23 to face the targets 22 and output detection signals continuously according to the rotation of the rotational members 23, have a phase difference of, for example, 90° in the electrical angle in the circumferential direction of the rotational members 23. Therefore, the detection signal of the magnetic sensor 1A and the detection signal of the magnetic sensor 1B can be mutually complemented for portions near the distorted regions where a maximum nonlinear change rate is marked, and the same thing can also be said about the detection signals of the magnetic sensors 2A and 2B.

In Embodiment 4, the magnetic field becomes stronger in opposing portions where the targets 22 face the magnetic sensors 1A, 2A, 1B, 2B that are positioned outside of the radial direction of the input shaft 16 and the output shaft 17 to face the targets 22, while the magnetic field becomes weaker in non-opposing portions. Thus, since a strong magnetic field portion and a weak magnetic field portion are periodically generated, each of the magnetic sensors 1A, 2A, 1B, 2B outputs a detection signal approximately to a sine waves or a triangular wave according to the passage of each target 22.

The detection signals have the maximum nonlinear change rate near the transition from rise to fall or fall to rise, but can be mutually complemented by the above-described signal processing method.

Since other structures and functions are the same as those of Embodiment 1, similar parts are designated with the same reference codes, and their detailed explanation and the explanation of the functions are omitted.

### Embodiment 5

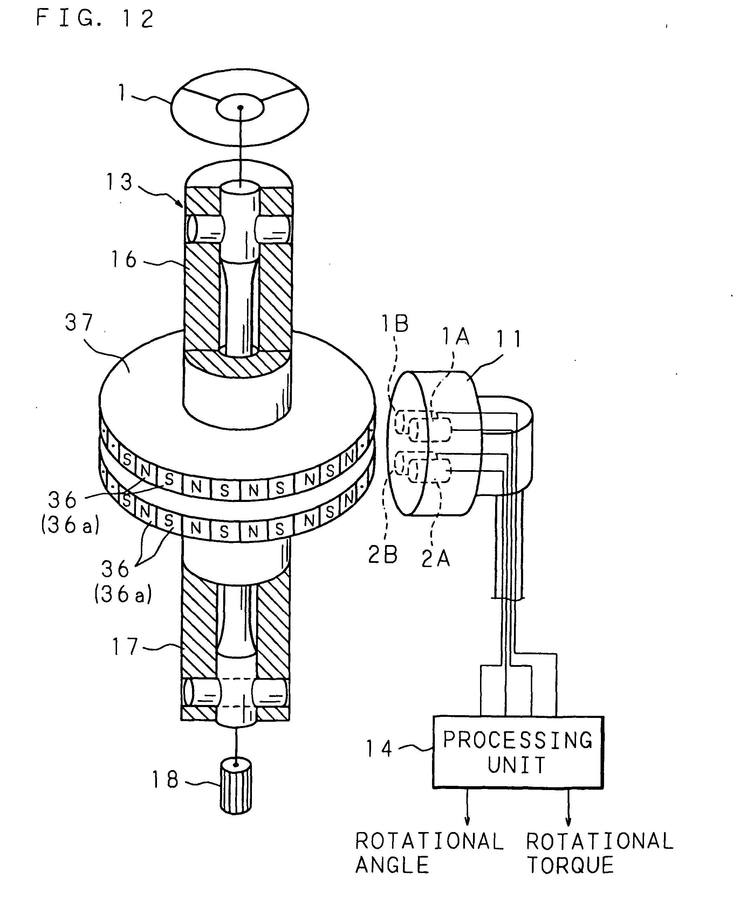

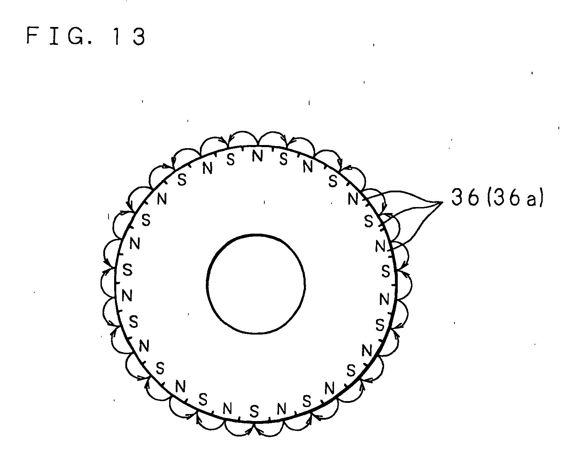

FIG. 12 is a schematic view showing the construction of Embodiment 5 of the rotational angle detecting device and torque detecting device according to the present invention; and FIG. 13 is a plan view of a target portion that shows the construction of

### Embodiment 5.

In the rotational angle detecting device and torque detecting device of Embodiment 5, in place of the targets 15 having the first inclining portions 15a and the second inclining portions 15b, targets 36 are constructed by magnetized portions 36a which are magnetized so that the magnetic poles reverse at substantially equal intervals in the direction of rotation of the rotational member comprising the input shaft 16 and output shaft 17, i.e., so as to have the N pole and S pole at substantially equal intervals.

The targets 36 are obtained by magnetizing magnetic rings 37, which are to be fitted and secured on the input shaft 16 and output shaft 17, to the N pole and S pole so that each of the magnetic sensors 1A, 2A, 1B, 2B can output a detection signal approximately to a sine wave or a triangular wave. Note that the magnetized portions 36a may be formed in the surfaces lying in the radial direction of each of the input shaft 16 and the output shaft 17 instead of the circumferential surfaces round the center of rotation of the input shaft 16 and the output shaft 17. In this case, each of the magnetic sensors 1A, 2A, 1B, 2B is provided at a position facing the surface lying in the radial direction.

The magnetic sensors 1A, 2A and the magnetic sensors 1B, 2B, which are positioned at different portions in the circumferential direction of the rotational members made of the magnetic rings 37 to face the targets 36 and output detection signals continuously according to the rotation of the magnetic rings 37, have a phase difference of 90° in the electrical angle, for example, in the circumferential direction of the magnetic rings 37. Therefore, the detection signal of the magnetic sensor 1A and the detection signal of the magnetic sensor 1B can be mutually complemented for portions near the distorted regions where a maximum nonlinear change rate is marked, and the same thing can also be said about the detection signals of the magnetic sensors 2A and 2B.

In Embodiment 5, as shown in FIG. 13, since the line of magnetic force from the N poles of the targets 36 are absorbed by adjacent S poles respectively, a strong magnetic field portion and a weak magnetic field portion are periodically generated.

In Embodiment 5, each of the magnetic sensors 1A, 2A, 1B, 2B that are positioned outside of the radial direction of the input shaft 16 and the output shaft 17 to face the targets 36 outputs a detection signal approximately to a sine wave or a triangular wave according to the passage of each target 36.

The detection signals have the maximum nonlinear change rate near the transition from rise to fall or fall to rise, but can be mutually complemented by the above-described signal processing method.

Since other structures and functions are the same as those of Embodiment 1, similar parts are designated with the same reference codes, and their detailed explanation and the explanation of the functions are omitted.

### Embodiment 6

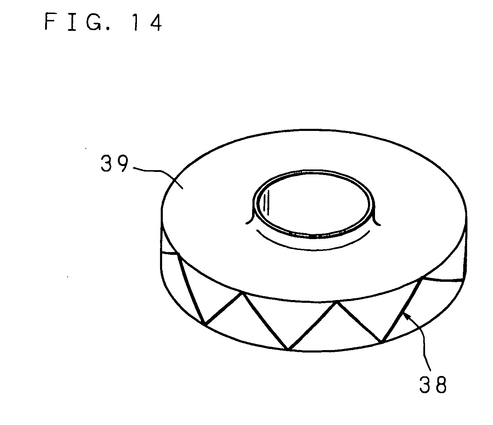

FIG. 14 is a schematic view showing the construction of Embodiment 6 of the rotational angle detecting device and torque detecting device according to the present invention.

The rotational angle detecting device and torque detecting device of Embodiment 6 are constructed by magnetizing targets 38 having substantially the same configuration as the targets 15 including the first inclining portions 15a and the second inclining portions 15b so that the magnetic poles reverse at substantially equal intervals on the circumferential surface of a rotational member 39 which is coaxially fitted and secured on the input shaft 16 and the output shaft 17.

In Embodiment 6, the targets 38 are magnetized on the circumferential surface of the disc-shaped rotational member 39 made of magnetic material. As a result, it is possible to obtain the targets 38 lying on the circumferential surface of the rotational member 39, without forming the first inclining portions 15a and second inclining portions 15b as the protruding bars in the manner described in Embodiment 1.

The magnetic sensors 1A, 2A and the magnetic sensors 1B, 2B, which are positioned at different portions in the circumferential direction of the rotational member 39 to face the targets 38 and output detection signals continuously according to the rotation of the rotational member 39, have a phase difference of 90° in the electrical angle, for example, in the circumferential direction of the rotational member 39. Therefore, the detection signal of the magnetic sensor 1A and the detection signal of the magnetic sensor 1B can be mutually complemented for portions near the distorted regions where a maximum nonlinear change rate is marked, and the same thing can also be said about the detection signals of the magnetic sensors 2A and 2B.

In Embodiment 6, each of the magnetic sensors 1A, 2A, 1B, 2B that are positioned outside of the radial direction of the input shaft 16 and the output shaft 17 to face the targets 38 outputs a detection signal approximately to a sine wave or a triangular wave according to the passage of each target 38.

The detection signals have the maximum nonlinear change rate near the transition from rise to fall or fall to rise, but can be mutually complemented by the above-described signal processing method.

Since other structures and functions are the same as those of Embodiment 1 and Embodiment 5, similar parts are designated with the same reference codes, and their detailed explanation and the explanation of the functions are omitted.

Note that, in Embodiment 5, while the targets are magnetized on the circumferential surfaces of the magnetic rings 37 so that the magnetic poles reverse at substantially equal intervals, it is also possible to form targets by providing a plurality of magnetic portions at substantially equal intervals on the circumferential surface of a nonmagnetic rotational member without magnetization so that the targets are magnetically discontinuous with respect to the peripheral portion.

Further, in Embodiment 6 explained above, while the targets 38 having substantially the same configuration as the targets 15 including the first inclining portions 15a and the second inclining portions 15b are magnetized on the circumferential surface of the rotational member 39 made of magnetic material, it is also possible to use magnetic material to form targets having substantially the same configuration as the targets 15 including the first inclining portions 15a and the second inclining portions 15b on the circumferential surface of a rotational member made of a nonmagnetic material and form the periphery of the targets made of the magnetic material as a nonmagnetic portion so that the targets are magnetically discontinuous with respect to the peripheral portion. Alternatively, it is possible to use a nonmagnetic material to form targets having substantially the same configuration as the targets 15 including the first inclining portions 15a and the second inclining portions 15b on the circumferential surface of a rotational member made of magnetic material and form the periphery of the targets made of the nonmagnetic material as a magnetic portion so that the targets are magnetically discontinuous with respect to the peripheral portion.

According to the rotational angle detecting device of claim 1, it is possible to easily eliminate a nonlinearly-changed region of a detection signal or a portion near a distorted region of a detection signal where a maximum nonlinear change rate is marked, thereby realizing a rotational angle detecting device capable of calculating a rotational angle by simple processing.

According to the rotational angle detecting device of claim 2, it is possible to easily eliminate a portion near a distorted region of a detection signal where a maximum nonlinear change rate is marked, thereby realizing a rotational angle detecting device capable of calculating a rotational angle by simple processing.

According to the rotational angle detecting device of claim 3, it is possible to readily form targets, allow easy handling and a reduction in the costs of the parts, easily eliminate a nonlinearly-changed region of a detection signal or a portion near a distorted region where a maximum nonlinear change rate is marked, thereby realizing a rotational angle detecting device capable of calculating a rotational angle by simple processing.

According to the rotational angle detecting device of claim 4, it is possible to readily obtain targets by gear-cutting the circumferential surface of the rotational member, achieve a reduction in the costs, easily eliminate a portion near a distorted region of a detection signal where a maximum nonlinear change rate is marked, thereby realizing a rotational angle detecting device capable of calculating a rotational angle by simple processing.

According to the rotational angle detecting device of claim 5, it is possible to readily obtain the targets by forming dents made of through holes in the cylindrical portion of a rotational member, achieve a reduction in the costs, easily eliminate a portion near a distorted region of a detection signal where a maximum nonlinear change rate is marked, thereby realizing a rotational angle detecting device capable of calculating a rotational angle by simple processing.

According to the rotational angle detecting device of claim 6, it is possible to readily obtain a magnetic target as compared to the case where a target made of a permanent magnet is provided on the rotational member, easily eliminate a portion near a distorted region of a detection signal where a maximum nonlinear change rate is marked, thereby realizing a rotational angle detecting device capable of calculating a rotational angle by simple processing.

According to the torque detecting device of claim 7, it is possible to easily eliminate a nonlinearly-changed region of a detection signal or a portion near a distorted region where a maximum nonlinear change rate is marked, thereby realizing a torque detecting device capable of calculating a steering torque by simple processing.

According to the steering apparatus of claim 8, it is possible to realize a steering apparatus comprising the torque detecting device of claim 7.

## Claims

1. A rotational angle detecting device, comprising a rotational member (12, 16 or 17); a target (15, 20, 22, 36 or 38) provided on said rotational member (12, 16 or 17); first detecting means (1A or 2A) disposed to face said target (15, 20, 22, 36 or 38) so as to output a detection signal according to a rotation of said rotational member (12, 16 or 17); and second detecting means (1B or 2B) disposed to face said target (15, 20, 22, 36 or 38) so as to output a detection signal whose phase is different from the detection signal outputted by said first detecting means (1A or 2A) by a predetermined electrical angle; and for detecting a displacement angle in a direction of rotation of said rotational member (12, 16 or 17) based on the detection signals outputted by said first detecting means (1A or 2A) and said second detecting means (1B or 2B), said rotational angle detecting device being **characterized by** further comprising:
first judging means (14) for judging whether each of the detection signal outputted by said first detecting means (1A or 2A) and the detection signal outputted by said second detecting means (1B or 2B) is greater or less than a substantially middle value between maximum and minimum values to be taken by said detection signals;
second judging means (14) for judging a relation in magnitude between the detection signal outputted by said first detecting means (1A or 2A) and the detection signal outputted by said second detecting means (1B or 2B); and
third judging means (14) for judging magnitudes of differences between each of said detection signals and said substantially middle value; wherein
the displacement angle in the direction of rotation of said rotational member (12, 16 or 17) is detected based on results of judgments by said first judging means (14), second judging means (14) and third judging means (14).

2. The rotational angle detecting device as set forth in Claim 1, **characterized in that** a plurality of said targets (20 or 22) are provided with a space therebetween in a circumferential direction of said rotational member (16 or 17).

3. The rotational angle detecting device as set forth in any one of Claims 1 through 2, **characterized in that**
said target (15, 20, 22, 36 or 38) is magnetically discontinuous with respect to a peripheral portion, and
said first detecting means (1A or 2A) and said second detecting means (1B or 2B) are magnetic sensors.

4. The rotational angle detecting device as set forth in Claim 2, **characterized in that** said targets (20) are made of protrusions (21a) arranged at substantially equally intervals in the circumferential direction of said rotational member (16 or 17).

5. The rotational angle detecting device as set forth in Claim 2, **characterized in that** said targets (22) are made of non-dent portions (23c) between dents (23b) formed at substantially equal intervals in the circumferential direction of said rotational member (16 or 17) so as to form said non-dent portions (23c).

6. The rotational angle detecting device as set forth in Claim 1, **characterized in that** said targets (36 or 38) are magnetized so that magnetic poles reverse at substantially equal intervals in a circumferential direction of said rotational member (16 or 17).

7. A torque detecting device for detecting a torque applied to a first shaft (16), based on a torsional angle generated in a connecting shaft (19) connecting coaxially said first shaft (16) and a second shaft (17), **characterized by** comprising rotational angle detecting devices of any one of Claims 1 through 6, attached to said first shaft (16) and second shaft (17), respectively, wherein
a difference between displacement angles detected by said rotational angle detecting devices respectively is made to be the torsional angle.

8. A steering apparatus **characterized by** comprising:
a first shaft (16) connected to a steering wheel;
a steering assist electric motor (27) driven and controlled based on a steering torque applied to said steering wheel;
a second shaft (17) interlocked with said electric motor (27); and
a torque detecting device of Claim 7 for detecting a steering torque applied to said first shaft (16), based on a torsional angle generated in a connecting shaft connecting said first shaft (16) and said second shaft (17).

## Patentansprüche

1. Drehwinkelerkennungsvorrichtung mit einem Drehteil (12, 16 oder 17); einem Ziel (15, 20, 22, 36 oder 38), das an dem Drehteil (12, 16 oder 17) vorgesehen ist; einer ersten Erkennungseinrichtung (1A oder 2A), die dem Ziel (15, 20, 22, 36 oder 38) zugewandt angeordnet ist, um ein Erkennungssignal entsprechend der Drehung des Drehteils (12, 16 oder 17) auszugeben; und einer zweiten Erkennungseinrichtung (1B oder 2B), die dem Ziel (15, 20, 22, 36 oder 38) zugewandt angeordnet ist, um ein Erkennungssignal auszugeben, dessen Phase um einen vorbestimmten elektrischen Winkel von dem Erkennungssignal verschieden ist, das von der ersten Erkennungseinrichtung (1A oder 2A) ausgegeben wird; und zum Erkennen eines Verschiebungswinkels in der Drehrichtung des Drehteils (12, 16 oder 17) basierend auf den von der ersten Erkennungseinrichtung (1A oder 2A) und der zweiten Erkennungseinrichtung (1B oder 2B) ausgegebenen Erkennungssignalen, wobei die Drehwinkelerkennungsvorrichtung **dadurch gekennzeichnet ist, daß** sie ferner aufweist:
eine erste Beurteilungseinrichtung (14) zum Beurteilen, ob das von der ersten Erkennungseinrichtung (1A oder 2A) ausgegebene Erkennungssignal und das von der zweiten Erkennungseinrichtung (1B oder 2B) ausgegebene Erkennungssignal jeweils größer oder kleiner als ein im wesentlichen mittlerer Wert zwischen dem Höchst- und dem Tiefstwert ist, welche die Erkennungssignale annehmen sollen;
eine zweite Beurteilungseinrichtung (14) zum Beurteilen des Verhältnisses zwischen den Größen des von der ersten Erkennungseinrichtung (1A oder 2A) ausgegebenen Erkennungssignals und des von der zweiten Erkennungseinrichtung (1B oder 2B) ausgegebenen Erkennungssignals; und
eine dritte Beurteilungseinrichtung (14) zum Beurteilen der Größe der Unterschiede zwischen jedem der Erkennungssignale und dem im wesentlichen mittleren Wert; wobei
der Verschiebungswinkel in der Drehrichtung des Drehteils (12, 16 oder 17) basierend auf Ergebnissen der Beurteilungen durch die erste Beurteilungseinrichtung (14), die zweite Beurteilungseinrichtung (14) und die dritte Beurteilungseinrichtung (14) erkannt wird.

2. Drehwinkelerkennungsvorrichtung nach Anspruch 1, **dadurch gekennzeichnet, daß** mehrere der Ziele (20 oder 22) in Umfangsrichtung des Drehteils (16 oder 17) mit einem zwischen diesen befindlichen Raum vorgesehen sind.

3. Drehwinkelerkennungsvorrichtung nach einem der Ansprüche 1 bis 2, **dadurch gekennzeichnet, daß**
das Ziel (15, 20, 22, 36 oder 38) in bezug auf einen Umfangsbereich magnetisch diskontinuierlich ist, und
die erste Erkennungseinrichtung (1A oder 2A) und die zweite Erkennungseinrichtung (1B oder 2B) Magnetsensoren sind.

4. Drehwinkelerkennungsvorrichtung nach Anspruch 2, **dadurch gekennzeichnet, daß** die Ziele (20) aus Vorsprüngen (21a) bestehen, die in im wesentlichen gleichen Abständen in Umfangsrichtung des Drehteils (16 oder 17) angeordnet sind.

5. Drehwinkelerkennungsvorrichtung nach Anspruch 2, **dadurch gekennzeichnet, daß** die Ziele (22) aus Zahnlücken (23c) zwischen Vertiefungen (23b) bestehen, die zur Bildung der Zahnlücken (23c) in im wesentlichen gleichen Abständen in Umfangsrichtung des Drehteils (16 oder 17) ausgebildet sind.

6. Drehwinkelerkennungsvorrichtung nach Anspruch 1, **dadurch gekennzeichnet, daß** die Ziele (36 oder 38) derart magnetisiert sind, daß die Magnetpole in im wesentlichen gleichen Abständen in Umfangsrichtung des Drehteils (16 oder 17) umgekehrt sind.

7. Drehmomenterkennungsvorrichtung zum Erkennen eines auf eine erste Welle aufgebrachten Drehmoments (16) basierend auf einem Torsionswinkel, der in einer Verbindungswelle (19) erzeugt wird, welche die erste Welle (16) und eine zweite Welle (17) koaxial verbindet, **dadurch gekennzeichnet, daß** sie Drehwinkelerkennungsvorrichtungen nach einem der Ansprüche 1 bis 6 aufweist, die an der ersten Welle (16) und der zweiten Welle (17) angebracht sind, wobei
die Differenz zwischen jeweils von den Drehmomenterkennungsvorrichtungen erkannten Verschiebungswinkeln als Torsionswinkel dient.

8. Lenkvorrichtung, **gekennzeichnet durch**:
eine mit einem Lenkrad verbundene erste Welle (16);
einen elektrischen Servolenkmotor (27), der auf der Basis eines auf das Lenkrad aufgebrachten Lenkdrehmoments angetrieben und gesteuert ist;
eine mit dem elektrischen Motor (27) zusammengreifende zweite Welle (17); und
eine Drehmomenterkennungsvorrichtung nach Anspruch 7 zum Erkennen eines auf die erste Welle (16) aufgebrachten Lenkdrehmoments basierend auf einem Torsionswinkel, der in einer die erste Welle (16) und die zweite Welle (17) verbindenden Verbindungswelle erzeugt wird.

## Revendications

1. Dispositif de détection d'angle de rotation, comprenant un élément rotatif (12, 16 ou 17) ; une cible (15, 20, 22, 36 ou 38) disposée sur ledit élément rotatif (12, 16 ou 17) ; un premier moyen de détection (1A ou 2A) disposé pour faire face à ladite cible (15, 20, 22, 36 ou 38) de façon à sortir un signal de détection en fonction d'une rotation dudit élément rotatif (12, 16 ou 17) ; et un second moyen de détection (1B ou 2B) disposé pour faire face à ladite cible (15, 20, 22, 36 ou 38) de façon à sortir un signal de détection dont la phase est différente du signal de détection sorti par ledit premier moyen de détection (1A ou 2A) d'un angle électrique prédéterminé ; et destiné à détecter un angle de déplacement dans une direction de rotation dudit élément rotatif (12, 16 ou 17) sur la base des signaux de détection sortis par ledit premier moyen de détection (1A ou 2A) et ledit second moyen de détection (1B ou 2B), ledit dispositif de détection d'angle de rotation étant **caractérisé en ce qu'**il comprend en outre :
un premier moyen de jugement (14) destiné à juger si le signal de détection sorti par ledit premier moyen de détection (1A ou 2A) et le signal de détection sorti par ledit second moyen de détection (1B ou 2B) sont supérieurs ou inférieurs à une valeur sensiblement moyenne entre des valeurs maximale et minimale à prendre par lesdits signaux de détection ;
un deuxième moyen de jugement (14) destiné à juger une relation en amplitude entre le signal de détection sorti par ledit premier moyen de détection (1A ou 2A) et le signal de détection sorti par ledit second moyen de détection (1B ou 2B) ; et
un troisième moyen de jugement (14) destiné à juger des amplitudes de différences entre chacun desdits signaux de détection et ladite valeur sensiblement moyenne ; dans lequel
l'angle de déplacement dans la direction de rotation dudit élément rotatif (12, 16 ou 17) est détecté sur la base de résultats de jugements par lesdits premier moyen de jugement (14), deuxième moyen de jugement (14) et troisième moyen de jugement (14).

2. Dispositif de détection d'angle de rotation selon la revendication 1, **caractérisé en ce qu'**une pluralité de dites cibles (20 ou 22) sont disposées avec un espace entre elles dans une direction circonférentielle dudit élément rotatif (16 ou 17).

3. Dispositif de détection d'angle de rotation selon l'une quelconque des revendications 1 à 2, **caractérisé en ce que**
ladite cible (15, 20, 22, 36 ou 38) est magnétiquement discontinue par rapport à une partie périphérique, et
ledit premier moyen de détection (1A ou 2A) et ledit second moyen de détection (1B ou 2B) sont des capteurs magnétiques.

4. Dispositif de détection d'angle de rotation selon la revendication 2, **caractérisé en ce que** lesdites cibles (20) sont faites de saillies (21a) agencées à intervalles sensiblement égaux dans la direction circonférentielle dudit élément rotatif (16 ou 17).

5. Dispositif de détection d'angle de rotation selon la revendication 2, **caractérisé en ce que** lesdites cibles (22) sont faites de parties non creuses (23c) entre des creux (23b) formés à intervalles sensiblement égaux dans la direction circonférentielle dudit élément rotatif (16 ou 17) de façon à former lesdites parties non creuses (23c).

6. Dispositif de détection d'angle de rotation selon la revendication 1, **caractérisé en ce que** lesdites cibles (36 ou 38) sont magnétisées de sorte que les pôles magnétiques s'inversent à intervalles sensiblement égaux dans une direction circonférentielle dudit élément rotatif (16 ou 17).

7. Dispositif de détection de couple destiné à détecter un couple appliqué à un premier arbre (16), sur la base d'un angle de torsion généré dans un arbre de raccordement (19) reliant de manière coaxiale ledit premier arbre (16) et un second arbre (17), **caractérisé en ce qu'**il comprend des dispositifs de détection d'angle de rotation selon l'une quelconque des revendications 1 à 6, fixés respectivement audit premier arbre (16) et audit second arbre (17), dans lequel
une différence entre des angles de déplacement détectés respectivement par lesdits dispositifs de détection d'angle de rotation est faite pour être l'angle de torsion.

8. Appareil de direction **caractérisé en ce qu'**il comprend :
un premier arbre (16) relié à un volant ;
un moteur électrique à direction assistée (27) entraîné et commandé sur la base d'un couple de direction appliqué audit volant ;
un second arbre (17) enclenché dans ledit moteur électrique (27) ; et
un dispositif de détection de couple selon la revendication 7 destiné à détecter un couple de direction appliqué audit premier arbre (16), sur la base d'un angle de torsion généré dans un arbre de raccordement reliant ledit premier arbre (16) et ledit second arbre (17).
